(19) Europäisches Patentamt
European Patent Office
Office européen des brevets

(11) Numéro de publication: **0 037 619**
**B1**

(12) **FASCICULE DE BREVET EUROPEEN**

(45) Date de publication du fascicule du brevet: **18.12.85**

(51) Int. Cl.⁴: **C 08 F 36/04**, C 08 F 4/44, C 08 F 2/38

(21) Numéro de dépôt: **81200383.8**

(22) Date de dépôt: **06.04.81**

(54) **Procédé de préparation de polymères de diènes conjugués ou de copolymères de diènes conjugués, soit entre eux, soit avec un composé vinylaromatique.**

(30) Priorité: **09.04.80 FR 8008111**

(43) Date de publication de la demande:
**14.10.81 Bulletin 81/41**

(45) Mention de la délivrance du brevet:
**18.12.85 Bulletin 85/51**

(84) Etats contractants désignés:
**AT BE CH DE GB IT LI LU NL SE**

(56) Documents cités:
**FR-A-1 357 645**
**FR-A-1 441 732**
**FR-A-2 273 822**
**FR-A-2 315 511**
**FR-A-2 340 958**

**Le dossier contient des informations techniques présentées postérieurement au dépôt de la demande et ne figurant pas dans le présent fascicule.**

(73) Titulaire: **MICHELIN & CIE (Compagnie Générale des Etablissements Michelin) Société dite:**
**4 rue du Terrail**
**F-63000 Clermont-Ferrand (FR)**

(72) Inventeur: **Freppel, Christian**
**124 bis avenue Joseph Claussat**
**F-63400 Chamalieres (FR)**

(74) Mandataire: **Hiebel, Robert et al**
**MICHELIN & CIE - Service K. Brevets**
**F-63040 Clermont-Ferrand Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 037 619 B1

## Description

La présente invention a pour objet un procédé permettant de modifier la distribution des masses moléculaires lors de la synthèse de polymères de diènes conjugués et de copolymères de diènes conjugués avec d'autres diènes conjugués ou avec des composés vinylaromatiques.

Il est connu d'après les demandes de brevet d'invention français No FR-A-2273822, FR-A-2315511 et FR-A-2340958, qui sont toutes au nom de la demanderesse, de préparer des polymères de diènes conjugués et des copolymères de diènes conjugués avec d'autres diènes conjugués ou avec des composés vinylaromatiques ayant simultanément une très faible teneur en enchaînements 1,2 ou 3,4 et une teneur élevée en enchaînements 1,4 trans à l'aide d'une composition catalytique comprenant un initiateur organolithien, un composé du baryum, du strontium ou du calcium et un composé organométallique d'un métal des groupes 2 B ou 3 A de la classification périodique des éléments du tableau de Mendeleev et éventuellement un alcoolate de métal alcalin.

Il est souhaitable de disposer de moyens permettant de modifier et de régler la distribution des masses moléculaires des polymères de diènes conjugués et des copolymères de diènes conjugués avec d'autres diènes conjugués ou avec des composés vinylaromatiques pour un certain nombre d'applications industrielles de ces produits car la modification de la distribution des masses moléculaires permet d'améliorer grandement certaines propriétés comme par exemple l'aptitude à être travaillé sur outil, le fluage à froid, la cohésion à cru, le collant à cru, etc. sans pénaliser les autres propriétés.

Il est connu de l'homme de l'art qu'il est possible d'élargir la distribution des masses moléculaires et d'obtenir des polymères bimodaux ou multimodaux en mélangeant plusieurs polymères de viscosités différentes.

Cependant, un tel procédé présente l'inconvénient de nécessiter la synthèse séparée de plusieurs polymères et copolymères de viscosités différentes ce qui entraîne des problèmes de reproductibilité du procédé, nécessite des quantités catalytiques très importantes, entraîne de longs délais et rend finalement ce procédé inintéressant tant du point de vue technique que du point de vue économique.

De même, il est connu de modifier la distribution des masses moléculaires de polymères et de copolymères dans des procédés réalisés soit en discontinu, soit en continu en fractionnant la quantité de catalyseur nécessaire et en l'ajoutant à des moments différents lors du déroulement de la polymérisation ou de la copolymérisation. Cependant, un tel mode opératoire qui nécessite également des quantités catalytiques très importantes, d'autant plus grandes que l'élargissement de la distribution de masses moléculaires souhaité est plus important, est par conséquent lui aussi très coûteux. De plus, il serait extrêmement difficile à réaliser industriellement.

La présente invention a pour objet de remédier à ces inconvénients en fournissant un procédé qui soit économiquement plus interessant et qui permette de modifier et de régler facilement la distribution des masses moléculaires au cours de la synthèse de polymères de diènes conjugués et de copolymères de diènes conjugués avec d'autres diènes conjugués ou avec des composés vinylaromatiques et d'obtenir des polymères et des compolymères bimodaux ou multimodaux.

La demanderesse a trouvé de manière inattendue qu'il est possible d'atteindre ce but lorsque la polymérisation des diènes conjugués ou la copolymérisation des diènes conjugués avec d'autres diènes conjugués ou des composés vinylaromatiques à l'aide des systèmes catalytiques précités est effectuée en présence d'un agent modificateur qui n'est pas un initiateur de polymérisation ou de copolymérisation.

Ainsi la présente invention concerne un procédé de préparation de polymères bimodaux ou multimodaux de diènes conjugués et de copolymères de diènes conjugués avec d'autres diènes conjugués ou avec des composés vinylaromatiques bi ou multimodaux consistant à faire réagir les monomères entre 20° C et 200° C en présence d'une composition catalytique comprenant a) un initiateur organolithien, b) un composé du baryum, du strontium ou du calcium et c) un composé organométallique d'un métal des groupes 2B ou 3A de la classification périodique des éléments du tableau de Mendeleev, caractérisé en ce qu'on ajoute au milieu réactionnel en cours de polymerisation lorsque la conversion des monomères est comprise entre 20 et 90%, à titre d'agent modificateur non initiateur de polymérisation ou de copolymérisation, un composé d'un métal de transition des classes 1B à 7B et 8 de la classification périodique des éléments du tableau de Mendeleev comme défini dans la 59e édition du livre "Handbook of Chemistry and Physics" ou un composé du magnésium de formule: $Mg(A)_2$ dans laquelle A représente soit un reste alcoyle ayant de 1 à 10 atomes de carbone, soit la reste alcoolate, phénate, ß-dicétonate, carboxylate.

Ce procédé permet de modifier à volonté la distribution des masses moléculaires et d'obtenir des propriétés de collant à cru, cohésion à cru et travaillabilité sur outil améliorées sans nécessiter des quantités supplémentaires de catalyseur et sans simultanément pénaliser les autres propriétés.

Le procédé conforme à l'invention permet d'obtenir des polymères et des copolymères ayant des distributions bimodales ou multimodales des masses moléculaires. La ou les fraction(s) obtenue(s) après addition de l'agent modificateur sont de bas poids moléculaire. En outre, les masses moléculaires moyennes de cette ou ces fractions de faibles masses moléculaires ainsi que la quantité de ces bas poids moléculaires sont fonction de la nature de l'agent modificateur, de la quantité d'agent modificateur ajouté et du moment

auquel cet agent est ajouté lors du déroulement de la polymérisation.

Pour un agent modificateur donné, il est possible en choisissant la quantité à ajouter et le moment de l'addition en fonction du pourcentage de conversion des monomères à l'instant considéré par rapport au pourcentage de conversion final, de préparer des polymères et copolymères bimodaux ou multimodaux dont on peut régler à volonté la quantité des hauts poids et des bas poids moléculaires ainsi que les masses moléculaires moyennes respectives de ces hauts poids et bas poids moléculaires. Bien que la quantité d'agent modificateur qui est nécessaire dépende de la nature de celui-ci et de l'ampleur de la modification de la distribution des masses moléculaires recherchées, il est souhaitable d'en utiliser des quantités telles que le rapport molaire du composé agent modificateur/initiateur organolithien soit compris entre 0,01 et 20.

En fonction de la nature de l'agent modificateur utilisé, il est possible dans la fraction des bas poids moléculaires soit de conserver la même microstructure que celle de la fraction des hauts poids moléculaires qui dépend entièrement du catalyseur utilisé, ce qui est le cas par exemple lorsqu'on utilise des composés dialcoyles magnésium, soit de diminuer le pourcentage d'enchaînements trans 1,4 ce qui est le cas par exemple avec les composés du magnésium autres que les dérivés dialcoylés. Enfin, l'agent modificateur permet dans de nombreux cas d'accroître la cinétique de la réaction de polymérisation bien qu'il ne soit pas par lui-même un initiateur.

L'agent modificateur est ajouté en cours de réaction, lorsque la conversion des monomères est comprise entre 20% et 90%. Le procédé peut être réalisé en masse ou en solution dans un solvant hydrocarboné soit en discontinu, soit en continu. Dans ce dernier cas, on opère dans deux ou plusieurs réacteurs placés en série, à des températures de polymérisation identiques ou différentes. Selon l'importance de l'effet désiré, l'agent modificateur est ajouté en une ou plusieurs fois.

Comme exemples représentatifs des composés magnésiens modificateurs on peut citer à titre de composés dialkyles magnésiens le dioctyl magnésium, le di-butyl magnésium, le di-sec. butyl magnésium, le n-butyl sec.-butyl magnésium, le sec.butyl ethyl magnésium, le butyl octyl magnésium. Parmi les composés du magnésium ne possédant pas de liaison carbone métal, on peut citer les alcoolates, phénates, ß-dicétonates, carboxylates, et en particulier les éthers alcoolates de magnésium répondant à la formule:

$$Mg[O(CH_2CH_2O)_nR]_2$$

dans laquelle R est un reste alcoyle inférieur. Ceux-ci ont l'avantage d'être solubles dans les solvants aliphatiques et aromatiques. En ce qui concerne les métaux de transition utilisables comme agents modificateurs, tous les métaux de transition peuvent être utilisés et à n'importe quel degré de valence. Conviennent cependant particulièrement les métaux de transition sous forme de sels organiques et notamment les alcoolates, phénates, ß-dicétonates et carboxylates.

On utilise préférentiellement à titre de métal de transition le manganèse, le fer, le cobalt sous forme $Co^{II}$, le cuivre sous forme $Cu^{I}$, le zinc, le nickel.

Par "initiateur organolithien" on entend en premier lieu tout composé organométallique comportant une ou plusieurs liaisons carbone-lithium, en second lieu tout adduct ionique-radicalaire du lithium et de certains hydrocarbures aromatiques polynucléaires, en troisième lieu le lithium métallique lui même, ainsi que finalement les oligomères produits par l'addition du lithium sur les diènes conjugués ou les styrènes substitués.

Comme exemples représentatifs d'initiateur organolithien, on peut citer les composés suivants:

Les organolithiens aliphatiques, tels que l'éthyl-lithium, le n-butyl-lithium, l'isobutyl-lithium, le sec.butyl-lithium, le ter.butyl-lithium, l'isopropyl-lithium, le n-amyl-lithium, l'isoamyl-lithium; les organolithiens alcéniques tels que l'allyl-lithium, le propényl-lithium, l'isobutényl-lithium, les polymères "vivants" polybutadiényl-lithium, polyisoprényl-lithium, polystyryl-lithium; les polyméthylènes dilithium tels que le 1,4-dilithiobutane, le 1,5-dilithiopentane, le 1-20-dilithioeicosane; les organolithiens aromatiques tels que le benzyl-lithium, le phényl-lithium, le 1,1-diphényl-méthyl-lithium; les polylithiens résultant de la réaction du lithium métallique avec des composés éthyléniques aryl-substitués, tels que le 1,1-diphényléthylène, le trans-stilbène, le tétraphényléthylène; les ions radicaux tels que le lithium-naphtalène, le lithium anthracène, le lithium-chrysène, le lithium-diphényle, le lithium-diphényle, ainsi que les dérivés substitués par un ou plusieurs alcoyles.

On entend par "composé du baryum, du strontium ou du calcium" les hydrures $H_2$ Ba, $H_2$ Sr et $H_2$ Ca, le sels d'acides organiques mono-ou polyfonctionnels de formules $(R—COO)_2$ Ba ou Sr ou Ca, $R_1$ — $(COO)_2$ B ou Sr ou Ca dans lesquelles R et $R_1$ sont des radicaux organiques, le premier monovalent, le second divalent, ne portant pas d'autres fonctions susceptibles d'inactiver l'initiateur organolithien, et les thioacides correspondants, également les alcoolates mono-ou polyfonctionnels et les thiolates correspondants; les phénates mono-ou polyfonctionnels et les thiophénates correspondants; les sels d'acides alcools et d'acides phénols de baryum, de strontium ou de calcium tels que les produits de réaction du baryum, du strontium ou du calcium avec l'acétylacétone, le dibenzoylméthane, la thénoyltrifluoro-acétone, la benzoyltrifluoro-acétone, la benzoyl-acétone; les dérivés organiques du baryum, du strontium ou du calcium tels que ceux du 1,1-diphényléthylène, du 1,2-acénaphtylène, du tétraphénylbutane, du α-méthyl-styrène, ou encore ceux tels que le diphényl baryum, strontium ou calcium, le bis-cyclopentadiényl baryum, strontium ou calcium, les trialcoylsilyls baryum, strontium ou calcium, le triphénylsilyl baryum, strontium ou calcium; les dérivés organiques mixtes tels que l'iodure de phényl-baryum, l'iodure méthyl-strontium ou calcium, les sels de baryum, strontium ou de calcium des amines secondaires; les métaux cétyles tels que la benzophénone baryum, strontium ou calcium, la cinnamone baryum, strontium ou calcium et les produits alcoylés correspondants, ainsi que les homologues soufrés; les ions radicaux du baryum, strontium et du calcium tels que ceux du naphtalène, de l'anthracène, du chrysène et du diphényle.

Comme exemples représentatifs des composés organométalliques des groupes 2 B ou 3 A, on peut citer:

Les dialcoyl-zinc ou cadmium tels que le diéthyl-zinc, le diéthyl-cadmium; les organoaluminiques halogénés ou non tels que le triéthyl-aluminium, le tri-isobutyl-aluminium, le chlorure de diéthyl-aluminium, le dichlorure d'éthyl-aluminium, le sesquichlorure d'éthyl-aluminium, le sesquichlorure de méthyl-aluminium; les hydrures de dialcoyl-aluminium, tels que l'hydrure de diéthyl-aluminium et l'hydrure de diisobutyl-aluminium.

Les composés du baryum, du strontium ou du calcium ainsi que les composés organométalliques du groupe 2B ou 3A peuvent se présenter sous forme d'un composé unique répondant à l'une des formules suivantes:

$$Me\ (M\ R_1R_2R_3R_4)_2$$

$$Me\ M'(R_1)_4$$

dans lesquelles Me représente un métal du groupe 2A, M un métal du groupe 3A, M' un métal du groupe 2B de la classification périodique des éléments du tableau de Mendeleev, $R_1$, $R_2$, $R_3$ représentant un radical alcoyle ou aralcoyle, $R_4$ représente soit un reste alcoyle ou aralcoyle, soit un reste XB dans lequel X représente un atome d'oxygène, de soufre ou d'azote et B représente soit un radical alcoyle ou aralcoyle, soit un reste $M(R_5R_6)$ dans lequel $R_5R_6$ représentent un radical alcoyle ou aralcoyle.

La polymérisation et la copolymérisation peuvent également être réalisées à l'aide de la composition catalytique définie ci-dessus et comportant en outre un alcoolate de métal alcalin et plus particulièrement un alcoolate répondant à l'une des deux formules suivantes:

$$R(O\ CH_2\ CH_2)_n\ O\ M''$$

$$(R)_2\ N\ CH_2\ CH_2\ O\ M''$$

dans lesquelles M'' représente un métal alcalin tel que le lithium, le sodium, le potassium et R représente un radical alcoyle et n un nombre entier.

A titre de solvant hydrocarboné, on peut utiliser des solvants aliphatiques comme l'hexane ou l'heptane ou aromatiques comme par exemple le benzène, le toluène.

Comme exemples représentatifs de diènes, on citera les diènes conjugués, tel que: le butadiène-1,3, l'isoprène, le 2,3-diméthyl-butadiène-1,3, le pentadiène-1,3, le méthyl-2 pentadiène-1,3, le 2,4-hexadiène.

Commes exemples représentatifs de composés vinylaromatiques, on citera: le styrène, l'ortho-, méta-, para-méthyl styréne ou le mélange commercial "vinyl-toluène", les di- et polyméthyl styrènes, le p-tertiobutyl styrène, les vinylnaphtalènes, les méthoxystyrènes, les halogénostyrènes, le vinyl-mésitylène, le divinylbenzène.

Les exemples non limitatifs suivants sont donnés à titre d'illustration de l'invention. Dans ces exemples, les viscosités inhérentes sont établies à 25°C en solution à 1 g/litre dans le toluène; les concentrations en composés constituant la composition cataytique et l'agent modificateur sont exprimés en micromoles pour 100 g de monomères. Les pourcentages en enchaînements trans, 1,2 sont exprimés par rapport à la partie polybutadiénique et le pourcentage de styrène est exprimé par rapport à la quantité totale de copolymère obtenu. Le temps écoulé entre le début de la réaction et le moment où l'on ajoute l'agent modificateur est désigné par "temps écoulé" et le pourcentage de conversion atteint au moment de l'addition le l'agent modificateur est désigné par "% conv.". Les figures représentent la distribution des masses moléculaires des polymères et copolymères obtenus à l'issue de la réaction qui a été obtenue par chromatographie par perméation de gel. On représente en abscisse les masses moléculaires et en ordonnée une différence d'indice de réfraction $\triangle$ i.

## Exemple 1

On réalise deux essais. Dans des bouteilles Steinie de 250 ml sous pression d'azote on introduit 100 ml de toluène à titre de solvant et 17,5 g de monomères à raison de 77% de butadiène et 23% de styrène en poids. On ajoute ensuite dans l'ordre le système catalytique constitué par:

1° le cocatalyseur préformé durant 30 min par réaction entre l'éthyl diglycolate de baryum, $Ba[O(CH_2CH_2O)_2Et]_2$ et le tri-isobutyl aluminium, Al $i\text{-}Bu_3$,

2° le butyl lithium, Bu Li, puis on place les bouteilles dans un bac thermostaté à 75° C où elles sont agitées.

Dans le deuxième essai, on ajoute en cours de polymérisation du n-butyl Mg sec.butyl au temps indiqué dans le tableau. Au bout d'une heure toutes les polymérisations sont stoppées par addition de méthanol et le polymère est récupéré de façon classique.

Les résultats son consignés dans le tableau I.

On constate que:

— l'addition de $R_2Mg$ contribue à augmenter la vitesse de réaction et à faire diminuer la viscosité du polymère obtenu sans modifier la microstructure du polymère et à entraîner une distribution

des masses moléculaires de type bimodal.

Exemple 2

On réalise deux essais en reproduisant les conditions opératoires de l'exemple 1 à l'exception près qu'on utilise de l'éthyl diglycolate de Mg, $Mg[O(CH_2CH_2O)_2Et]_2$ soluble dans les solvants aliphatiques et aromatiques.

Au bout d'une heure toutes les polymérisations sont stoppées par addition de méthanol et le polymère est récupéré de façon classique. Les résultats obtenus sont consignés dans le tableau II.

Exemple 3

On réalise quatre essais. Dans des bouteilles Steinie de 250 ml sous pression d'azote rectifié on introduit 100 ml d'heptane à titre de solvant et 13,6 g de butadiène. On ajoute ensuite dans l'ordre le système catalytique constitué par:

1° le cocatalyseur préformé durant 30 mn par réaction entre le nonyl phénate de baryum ($Ba(OR)_2$) et le triéthyl aluminium ($Al Et_3$),

2° le butyl lithium (Bu Li),

3° l'éthyl diglycolate de lithium, $Et(O CH_2CH_2)_2O$ Li.

Les bouteilles sont ensuite placées dans un bac thermostaté à 80° C où elles sont agitées.

Dans certaines bouteilles on ajoute en cours de polymérisation soit du Mg di-sec.butyl ($Mg R_2$), soit de l'éthyl diglycolate de Mg, $Mg (OR)_2$ soluble dans les solvants aromatiques.

Au bout de 1h 30 toutes les polymérisations sont stoppées par addition de méthanol et le polymère est récupéré de façon classique.

Les résultats sont consignés dans le tableau III.

On constate que l'addition des composés du magnésium permet de créer das bas poids moléculaires. Le polybutadiène bimodal obtenu dans l'essai n° 2 est caractérisé par 65% de hauts poids moléculaires de viscosité moyenne voisine de 1,9 et par 35% d'une fraction de bas poids moléculaires de viscosité moyenne de 0,7. La microstructure des fractions hauts poids et bas poids est respectivement: 1,2 : 3,8% trans: 81%; 1,2:4%, trans: 80%.

Exemple 4

On réalise trois essais. Dans des bouteilles Steinie de 250 ml sous pression d'azote rectifié, on introduit 100 ml d'heptane et 17,5 g de butadiène. On ajoute ensuite dans l'ordre le système catalytique constitué par:

1° le cocatalyseur $Ba[Al Et_4]_2$,

2° l'initiateur organolithien Bu Li.

Les bouteilles sont ensuite placées dans un bac thermostaté à 80° C où elles sont agitées.

Dans certaines bouteilles on ajoute en cours de polymérisation du n-Bu Mg octyl. Au bout d'une heure toutes les polymérisations sont stoppées par addition de méthanol et le polymère est récupéré de façon habituelle. Les résultats sont consignés dans le tableau IV. L'addition de $R_2$ Mg permet d'obtenir des bas poids moléculaires.

Exemple 5

On réalise deux essais. Dans des bouteilles Steinie de 250 ml sous pression d'azote on introduit 100 ml de toluène à titre de solvant et 17,5 g de butadiène. On ajoute ensuite le système catalytique préformé et constitué par:

— l'initiateur organolithien, le n-butyl lithium (Bu Li),

— le cocatalyseur qui est constitué par un mélange de triéthyl aluminium et d'éthyl diglycolate de baryum.

On place ensuite les bouteilles dans un bac thermostaté à 55° C où elles sont agitées.

Dans l'essai n° 1 on ajoute en cours de polymérisation de tertiobutanolate de cuivre. Au bout de 3h 30 toutes les polymérisations sont stoppées par addition de méthanol et le polymère est récupéré de façon classique. Les résultats obtenus sont consignés dans le tableau V.

TABLEAU I

| Essai | système catalytique | | | addition $R_2Mg$ | | | % Conv. final | Copolymère | | | | |
|---|---|---|---|---|---|---|---|---|---|---|---|---|
| | Al R3 | $Ba(OR)_2$ | Bu Li | temps écoulé | % conv. | quantité | | viscosité | % 1–2 | % trans | % styrène | GPC fig. |
| T | 2000 | 500 | 1500 | | | | 83 | 1,52 | 5 | 79 | 10 | 1.1 |
| 1 | 2000 | 500 | 1500 | 15min | 54 | 500 | 90 | 1,02 | 5 | 79 | 12 | 1.2 |

TABLEAU II

| Essai | Système catalytique | | | addition Mg $(OR)_2$ | | | % Conv. final | Copolymère | | | | |
|---|---|---|---|---|---|---|---|---|---|---|---|---|
| | Al $R_3$ | $Ba(OR)_2$ | BuLi | temps écoulé | % conv. | quantité | | viscosité | % 1–2 | % trans | % styrène | GPC fig. |
| T | 2000 | 500 | 1500 | | | | 85 | 1,5 | 5 | 79 | 11 | 1.1 |
| 1 | 2000 | 500 | 1500 | 15min | 50 | 250 | 80 | 1,2 | 5,5 | 78 | 10 | 2.1 |

TABLEAU III

| Essai | Système catalytique | | | | addition de $R_2Mg$ ou $Mg(OR)_2$ | | | | % conv. final | polymère | | | |
|---|---|---|---|---|---|---|---|---|---|---|---|---|---|
| | $Ba(OR)_2$ | $AlEt_3$ | Bu Li | RO Li | temps écoulé | % conv. | quant. Mg $R_2$ | quant. $Mg(OR)_2$ | | viscosite | % 1–2 | % trans | GPC fig. |
| T | 370 | 1480 | 1110 | 740 | | | | | 98 | 2,02 | 3,5 | 82 | 3.1 |
| 1 | 370 | 1480 | 1110 | 740 | 25min | 55 | 370 | | 98 | 1,63 | 4 | 80 | 3.2 |
| 2 | 370 | 1480 | 1110 | 740 | 25min | 55 | 740 | | 98 | 1,48 | 4 | 80 | 3.3 |
| 3 | 370 | 1480 | 1110 | 740 | 25min | 55 | | 370 | 77 | 1,70 | 4 | 80 | 3.4 |

TABLEAU IV

| Essai | Système catalytique | | addition de $R_2$ Mg | | | % conv. final | Polymere | | | |
|---|---|---|---|---|---|---|---|---|---|---|
| | $Ba[AlEt_4]_2$ | Bu Li | temps écoulé | % conv. | quantite | | viscosité | % 1–2 | % trans | GPC fig. |
| T | 686 | 686 | | | | 73 | 1,16 | 3,8 | 79 | 4.1 |
| 1 | 686 | 686 | 12min | 35 | 343 | 77 | 0,82 | 3,9 | 79 | 4.2 |
| 2 | 686 | 696 | 12min | 35 | 686 | ·60 | 0,70 | 3,9 | 79 | 4.3 |

TABLEAU V

| Essai | Système catalytique | | | addition du sel de CuI | | | % Conv. | Polymère | | | |
|---|---|---|---|---|---|---|---|---|---|---|---|
| | $Ba(OR)_2$ | Al $Et_3$ | Bu Li | temps écoulé | % conv. | quantité ajoutée | | viscosité | % 1–2 | % trans | GPC fig. |
| T | 571 | 2571 | 2285 | | | | 70 | 2,6 | 3,5 | 71 | 5.1 |
| 1 | 571 | 2571 | 2285 | 90 min | 35 | 30 | 75 | 1,8 | 3,5 | 78 | 5.2 |

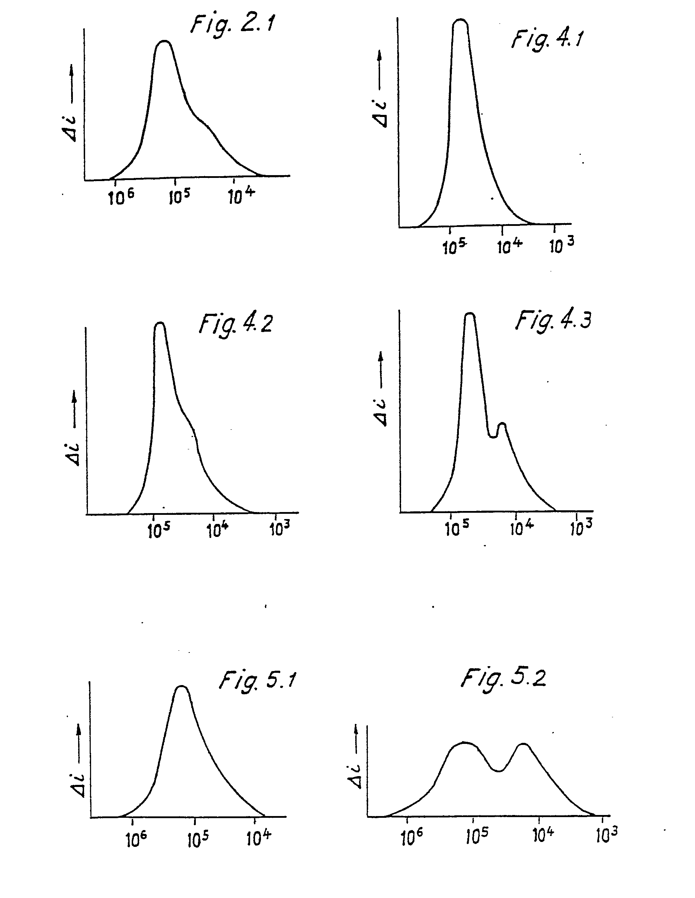

**Revendications**

1. Procédé de préparation de polymères bimodaux ou multimodaux de diènes conjugués et de copolymères bimodaux ou multimodaux de diènes conjugués entre eux ou avec des composés vinylaromatiques consistant à faire réagir les monomères à une température comprise entre 20° C et 200° C avec une composition catalytique comprenant a) un initiateur organolithien b) un composé du baryum, du strontium ou du calcium et c) un composé organométallique d'un métal des groupes 2B ou 3A de la classification périodique des éléments du tableau de Mendeléev et à ajouter en cours de réaction lorsque la conversion des monomères est comprise entre 20 et 90%, un agent modificateur non initiateur, caractérisé en ce que cet agent modificateur non initiateur est un composé d'un métal de transition des classes 1B à 7B et 8 de la classification périodique des éléments ou un composé du magnésium répondant à la formule générale: $Mg(A)_2$ dans laquelle A représente soit un reste alcoyle ayant de 1 à 10 atomes de carbone, soit un reste alcoolate, phénate, ß-dicétonate, carboxylate.

2. Procédé selon la revendication 1, caractérisé en ce que l'agent modificateur est un alcoolate, phénate, ß-dicétonate ou carboxylate d'un métal de transition.

3. Procédé selon la revendication 2, caractérisé en ce que l'agent modificateur est le tertiobutanolate de cuivre.

4. Procédé selon la revendication 1, caractérisé en ce que l'agent modificateur est choisi parmi le sec-butyl éthyl magnésium, le n-butyl, sec.butyl magnésium ou le butyl octyl magnésium.

5. Procédé selon la revendication 1, caractérisé en ce que l'agent modificateur répond à la formule $Mg[O(CH_2CH_2O)_2C_2H_5]_2$.

6. Procédé selon l'une quelconque des revendications 1 à 5, caractérisé en ce que l'agent modificateur est présent en quantité telle que le rapport molaire agent modificateur/initiateur organolithien soit compris entre 0,01 et 20.

7. Procédé selon l'une quelconque des revendications 2 à 6, caractérisé en ce qu'on ajoute à la composition catalytique initiale un alcoolate de métal alcalin.

8. Procédé selon la revendication 7, caractérisé en ce que l'alcoolate de métal alcalin répond à l'une des formules

$$R(OCH_2CH_2)_nOM'';$$

$$(R)_2NCH_2CH_2OM'',$$

dans lesquelles M'' représente un métal alcalin, R un radical alcoyle et n un nombre entier.

9. Procédé selon l'une quelconque des revendications 2 à 8, caractérisé en ce qu'on opère en présence d'un solvant hydrocarboné.

10. Procédé selon l'une quelconque des revendications 2 à 9, caractérisé en ce qu'on opère en continu.

**Patentansprüche**

1. Herstellungsverfahren bimodaler oder multimodaler Polymere konjugierter Diene und bimodaler oder multimodaler Copolymere konjugierter Diene untereinander oder mit vinylaromatischen Verbindungen, wobei die Monomere bei einer Temperatur zwischen 20 und 200°C mit einer katalytischen Zusammensetzung, die a) einen lithiumorganischen Starter, b) eine Verbindung mit Barium, Strontium oder Kalzium und c) eine organometallische Verbindung eines Metalls der Gruppen 2B oder 3A des Periodensystems der Elemente nach Mendeléev enthält, reagieren und im Zuge der Reaktion, während die Umwandlung des Monomers zu 20 bis 90% erfolgt ist, ein modifizierendes, nicht initierendes Mittel hinzufügt, dadurch gekennzeichnet, daß das modifizierende, nicht initierende Mittel eine Verbindung mit einem Übergangsmetall der Klassen 1B bis 7B und 8 des Periodensystems oder eine Magnesiumverbindung der allgemeinen Formel:

$$Mg\ (A)_2,$$

in der A entweder einen Alkylrest mit 1 bis 10 Kohlenstoffatomen oder einen Alkoholat-, Phenolat-, ß-Diketonat- oder Carboxylat-Rest darstellt, ist.

2. Verfahren nach Anspruch 1, dadurch gekennzeichnet, daß das Modifiziermittel ein Alkoholat, Phenolat, ß-Diketonat oder Carboxylat eines Übergangsmetalls ist.

3. Verfahren nach Anspruch 2, dadurch gekennzeichnet, daß das Modifiziermittel tertiäres Kupferbutanolat ist.

4. Verfahren nach Anspruch 1, dadurch gekennzeichnet, daß das Modifiziermittel aus der Gruppe des sekundären Butyläthylmagnesiums, des n-Butyl-sekundären Butylmagnesiums oder des Butyloctylmagnesiums ausgewählt wird.

5. Verfahren nach Anspruch 1, dadurch gekennzeichnet, daß das Modifiziermittel die Formel $Mg[O(CH_2CH_2O)_2C_2H_5]_2$ aufweist.

6. Verfahren nach einem der Ansprüche 1 bis 5, dadurch gekennzeichnet, daß das Mol.-Verhältnis Modifiziermittel/lithiumorganisches Startmittel zwischen 0,01 und 20 liegt.

7. Verfahren nach einem der Ansprüche 2 bis 6, dadurch gekennzeichnet, daß man der katalytischen Initialzusammensetzung ein Alkalimetallalkoholat zusetzt.

8. Verfahren nach Anspruch 7, dadurch gekennzeichnet, daß das Alkalimetallalkoholat eine der Formeln:

$$R(OCH_2CH_2)_nOM'' \text{ oder } (R)_2NCH_2CH_2OM''$$

aufweist, in denen M'' ein Alkalimetall, R ein Alkylradikal und n eine ganze Zahl bedeutet.

9. Verfahren nach einem der Ansprüche 2 bis 8, dadurch gekennzeichnet, daß man in Gegenwart eines Kohlenwasserstofflösungsmittels arbeitet.

10. Verfahren nach einem der Ansprüche 2 bis 9, dadurch gekennzeichnet, daß man kontinuierlich arbeitet.

**Claims**

1. Process for the preparation of bimodal or multimodal homopolymers of conjugated dienes or of bimodal or multimodal copolymers of a conjugated diene with another conjugated diene or with a vinyl aromatic compound, consisting in polymerizing the monomer(s) in a reaction medium at a temperature of between 20°C and 200°C in the presence of a catalyst system comprising a) an organolithium initiator, b) a barium, strontium or calcium compound, and c) an organometallic compound of a metal of group 2 B or 3 A of the periodic classification of elements of the Mendeleev table, and in adding during the course of the polymerization reaction when the conversion of the monomer(s) is between 20% and 90% a modifying agent which is not a polymerization initiator, characterized by the fact that this modifying agent is a compound of a transition metal of groups 1 B to 7 B and 8 of the periodic classification of the elements of the Mendeleev table or a magnesium compound of the general formula $Mg(A)_2$ in which A represents an alkyl radical having from 1 to 10 carbon atoms or an alcoholate, phenate, beta-diketonate or carboxylate radical.

2. A process according to claim 1, characterized by the fact that the compound of the transition metal is an alcoholate, phenate, beta-diketonate or carboxylate.

3. A process according to claim 2, characterized by the fact that the compound of the transition metal is copper tertiobutanolate.

4. A process according to claim 1, characterized by the fact that the modifying agent is selected from among ethyl sec-butyl magnesium, n-butyl sec-butyl magnesium and n-butyl octyl magnesium.

5. A process according to claim 1, characterized by the fact that the modifying agent is magnesium ethyl diglycolate.

6. A process according to claim 1, characterized by the fact that the modifying agent is added in such amount that the molar ratio of the modifying agent to the organolithium initiator is between 0.01 and 20.

7. A process according to claim 2, characterized by the fact that the alkali metal alcoholate is added to the initial catalyst system.

8. A process according to claim 7, characterized by the fact that the alkali metal alcoholate has one of the formulas

$$R(OCH_2CH_2)_nOM' \text{ or}$$

$$(R)_2NOCH_2CH_2OM'$$

in which M' represents an alkali metal, R and alkyl radical and n a whole number.

9. A process according to claim 1, characterized by the fact that the polymerization is conducted in a hydrocarbon solvent.

10. A process according to claim 1, characterized by the fact that the polymerization is conducted continuously.

Fig. 1.1

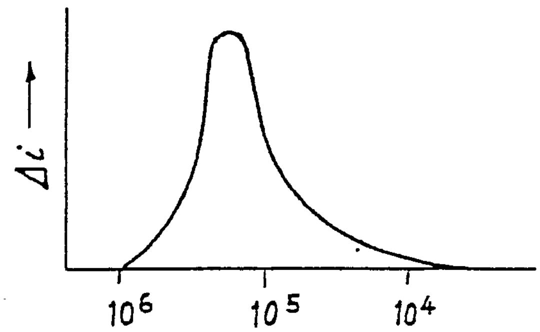


Fig. 1.2

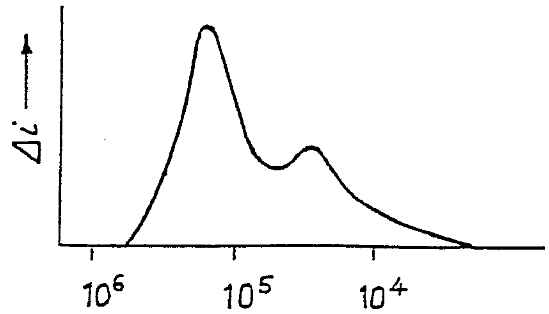


Fig. 3.1

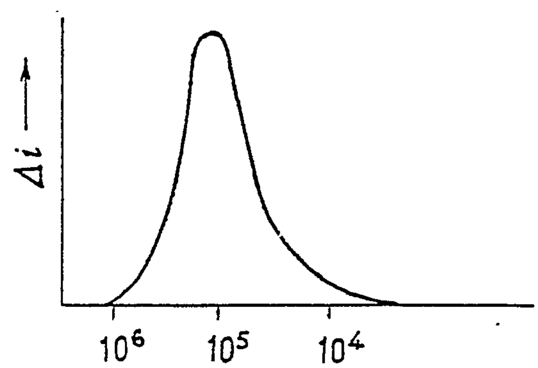


Fig. 3.2

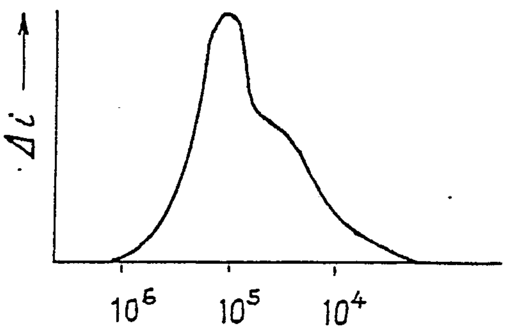


Fig. 3.3

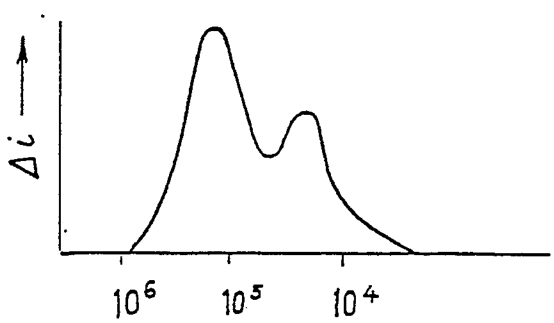


Fig. 3.4

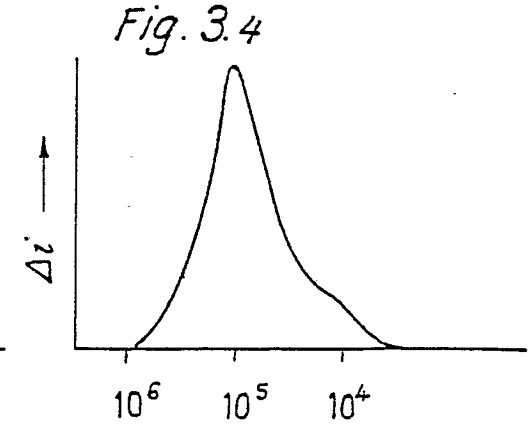

Fig. 2.1

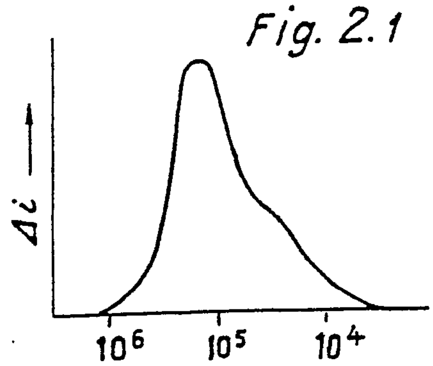


Fig. 4.1

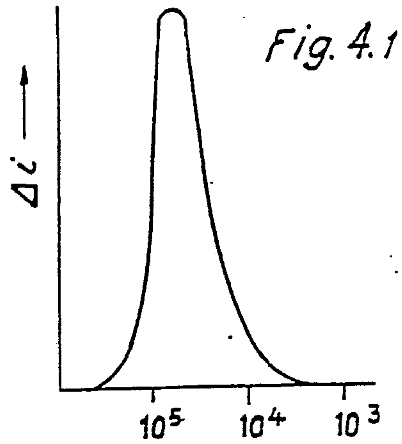


Fig. 4.2

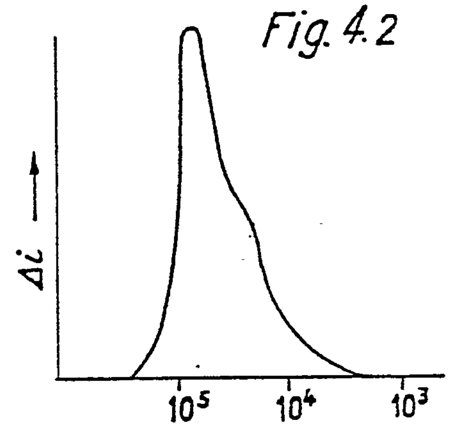


Fig. 4.3

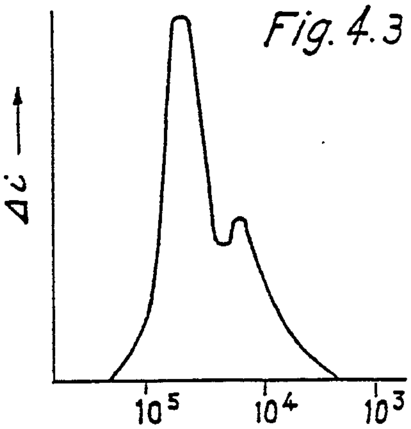


Fig. 5.1

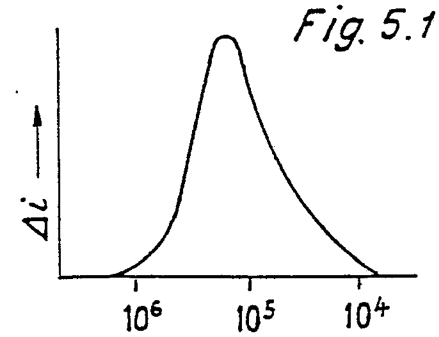


Fig. 5.2